# EUROPEAN PATENT APPLICATION

(11) **EP 1 835 367 A2**
(43) Date of publication of application: **19.09.2007**
(21) Application number: 07250969.8
(22) Date of filing: 08.03.2007
(51) Int. Cl.: G05B 19/406

(54) **Machine with program check function**

(30) Priority: 13.03.2006 JP 2006068112
(71) Applicant: FANUC LTD, Minamitsuru-gun, Yamanashi 401-0597 (JP)
(72) Inventor: Maki, Susumu, Minamitsuru-gun Yamanashi, 401-0511 (JP); Maekawa, Susumu, Minamitsuru-gun Yamanashi, 401-0301 (JP)
(74) Representative: Billington, Lawrence Emlyn

(57) **Abstract**

A motor is driven at a low speed to move a moving part at the start and end of movement based on a movement command given in one block of a program in a machining program check mode and at a high speed in an intermediate section. Since the moving speed is low at the start of movement, the direction of movement can be easily checked if it is correct. Since the moving speed is low at a point of time near the end of movement, moreover, an operator can enjoy a time allowance to determine whether or not there is a possibility of the moving part of a driven machine interfering with any other object.

## Description

### BACKGROUND OF THE INVENTION

### 1. Field of the Invention

The present invention relates to a machine with a program check function such that interference between a moving part of the machine and another object can be found with ease.

### 2. Description of the Related Art

In the case of a numerically controlled machine tool (NC machine tool), a prepared machining program must be checked for operation before actual machining in order to avoid interference between a spindle, a jig, etc. that is attributable to program errors or misplanned machining. Available methods of operation check include a method in which a program is executed block by block, a method in which a machine is operated at a moving speed lowered to a predetermined level, etc.

Also in the case of a robot, operation to check the occurrence of interference is performed by lowering the operating speed or executing block by block a program created by an off-line programming device or the like before the program is executed by the robot.

For example, there is known an NC machine tool that is configured to determine whether an NC program is not subjected to a test operation yet and to restrict the feed speed lest it exceed a predetermined limit value if the test operation is not concluded to have been finished (Japanese Patent Application Laid-Open No. 11-165238).

The following is a description of a prior art technique described in Japanese Patent Application Laid-Open No. 11-33867. Test cutting is first executed at a low quick traverse speed V1 and continuous machining is then performed at a safe quick traverse speed V2. After this continuous machining at the speed V2 is finished, it is determined whether or not operation of a suspension switch, tool correction amount input switch, override switch, single-block switch, or the like, that is, an operator's interventionary operation, is executed during the continuous machining. If it is then concluded that the operator's interventionary operation is performed, the continuation machining is executed again at the safe quick traverse speed V2. If it is concluded that the machining is finished without the operator's intervention, on the other hand, machining conditions then used are stored in a memory. Thereafter, it is determined whether or not modification of machining program contents, tool correction amount change, or tool change is made at the time of automatic continuous machining. If it is then concluded that neither modification of the machining program contents, nor tool correction amount change, nor tool change is made, machining is performed at a machining quick traverse speed V3 (V1 < V2 < V3). If it is concluded that modification of the machining program contents, tool correction amount change, or tool change is made, on the other hand, machining is performed at the safe quick traverse speed V2.

There is also known an arrangement in which a drive motor is driven in a manner such that its driving current, acceleration/deceleration time constant, quick traverse speed, etc. in parameters are restricted to 50% or 30% during manual-mode operation, as compared with parameter values for normal automatic operation (Japanese Patent Application Laid-Open No. 4-82645).

In checking the program operation for interference by executing the program block by block, the operation of a machine, such as a machine tool or robot, must be restarted every time it is stopped. Thus, there is a problem that the program operation check takes much time and labor. If the moving speed of the machine is clamped to a fixed value during the operation check, as described in Japanese Patent Applications Laid-Open Nos. 11-165238 and 11-33867, moreover, the uniformity of the speed lowers the efficiency of the check.

### SUMMARY OF THE INVENTION

The present invention relates to a machine which comprises a controller and in which a drive motor for each axis is driven in accordance with a program.

According to a first aspect of the invention, the controller is provided with a machining program check mode for checking operation based on the program, and, in the machining program check mode, the machine is moved at a speed lower than a programmed or set speed at the start of movement or at the start and end of movement when a movement command for each block of the program is executed during operation of a machining program.

According to a second aspect of the invention, the controller has a program check function and comprises: selecting means for selecting a machining program check mode for checking operation based on the program; movement start speed control means which drives the drive motor at a set low movement start speed during a time interval from the start of movement based on a movement command given in each block to a switching point set by a time duration or a movement amount when the block is executed during operation of a machining program in the machining program check mode; and high speed control means which drives the drive motor at a set speed higher than the movement start speed after the switching point is reached.

The controller may further comprise movement end speed control means which stats to drive the drive motor at a movement end speed lower than the speed driven by the high speed control means at a set point anterior to the end point of the movement command in each block by a set distance when the block is executed during operation of a machining program in the machining program check mode.

The movement start speed control means may switch the movement start speed between a plurality of speeds and controls the speed of the drive motor with use of a plurality of switching points and movement start speeds set individually for the switching points.

The movement end speed control means may switch the movement end speed between a plurality of speeds and controls the speed of the drive motor with use of a plurality of switching points and movement end speeds set individually for the switching points.

An acceleration/deceleration time constant to be set in the machining program check mode may be larger than an acceleration/deceleration time constant for normal program operation.

The speed set for the high speed control means may be a maximum speed.

The machine with a program check function according to the present invention, arranged in this manner, can check the program efficiently and safely for operation.

If the program is executed in the program check mode, according to the present invention, the speed at the start of movement or the speeds at the start and end of movement are low when the drive motor moves in response to the movement command in each block. At the start of movement, therefore, the direction of movement can be identified with ease, so that it can be easily determined whether or not a moving part will interfere with any other object. Since the speed at the end of movement is also low, moreover, an operator can enjoy a time allowance to determine the possibility of interference, so that he/she can prevent the occurrence of interference securely and accurately.

### BRIEF DESCRIPTION OF THE DRAWINGS

The above and other objects and features of the present invention will be obvious from the ensuing description of embodiments with reference to the accompanying drawings, in which:
FIG. 1 is a schematic block diagram of a numerical controller for controlling a machine according to one embodiment of the invention;
FIG. 2 is a diagram showing a first example of speed change during the execution of one block of a machining program in a machining program check mode provided for the machine that is controlled by the numerical controller of FIG. 1;
FIG. 3 is a diagram showing a second example of speed change during the execution of one block of the machining program in the machining program check mode provided for the machine that is controlled by the numerical controller of FIG. 1;
FIG. 4 is a diagram showing a third example of speed change during the execution of one block of the machining program in the machining program check mode provided for the machine that is controlled by the numerical controller of FIG. 1;
FIG. 5 is a diagram showing a fourth example of speed change during the execution of one block of the machining program in the machining program check mode provided for the machine that is controlled by the numerical controller of FIG. 1;
FIG. 6 is a flowchart showing an algorithm of processing in the program check mode for the first example of speed change that is executed by a CPU of the numerical controller of FIG. 1;
FIG. 7 is a flowchart showing an algorithm of processing in the program check mode for the second example of speed change that is executed by the CPU of the numerical controller of FIG. 1; and
FIG. 8 is a flowchart showing an algorithm of processing in the program check mode for the third example of speed change that is executed by the CPU of the numerical controller of FIG. 1.

### DETAILED DESCRIPTION OF THE PREFERRED EMBODIMENTS

One embodiment of the present invention that is applied to a numerically controlled machine tool will now be described with reference to the accompanying drawings.

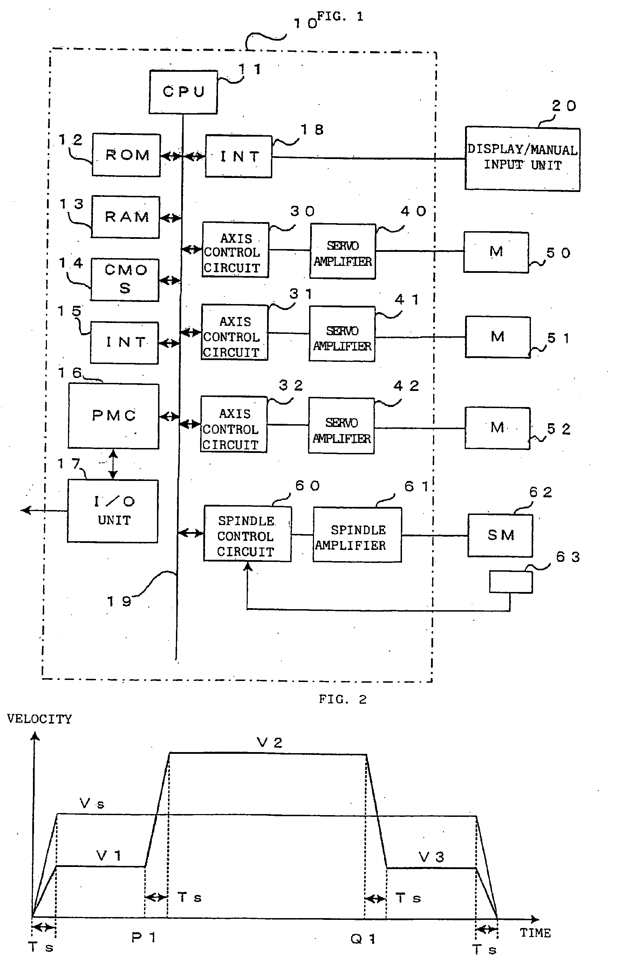

FIG. 1 is a schematic block diagram of a computerized numerical controller (CNC) for controlling the machine tool according to the one embodiment of the present invention.

A CPU 11 is a processor for generally controlling a numerical controller 10. The CPU 11 reads out a system program stored in a ROM 12 through a bus 19 and controls the whole numerical controller in accordance with the system program. A RAM 13 is loaded with various data, such as temporary calculation data, display data, set values, etc. The set values are inputted by an operator through a display/manual input unit 20, which is formed of a display device, such as a CRT or liquid crystal, and a keyboard or the like. A CMOS memory 14 is formed as a nonvolatile memory, which is backed up by a battery (not shown) so that it can maintain a stored state even when the power of the numerical controller 10 is turned off. The CMOS memory 14 is stored with a machining program read through an interface 15, a machining program inputted through the display/manual input unit 20, etc. Further, the ROM 12 is previously loaded with a processing program for a machining program check mode characteristic of the present invention.

The interface 15 enables connection between the numerical controller 10 and an external apparatus. A programmable machine controller (PMC) 16 outputs a signal for control through an I/O unit 17 to an auxiliary device (e.g., an actuator such as a robot hand for tool change) of the machine tool as an object of control in accordance with a sequence program in the numerical controller 10. Further, the PMC 16 receives signals from various switches and the like on a control panel, which is located on a body of the machine tool as the object to be controlled by the numerical controller, processes necessary signals, and delivers them to the CPU 11.

Axis control circuits 30, 31 and 32 for individual axes receive movement command amounts for the axes from the CPU 11 and deliver commands for the axes to servo amplifiers 40, 41 and 42, respectively. The servo amplifiers 40 to 42 receive these commands and drive their corresponding servomotors 50 to 52 for use as drive motors for the individual axes of the machine (object of control). The servomotors 50 to 52 for the axes, which have position/speed detectors built-in, feed back position feedback signals and speed feedback signals from the position/speed detectors to the axis control circuits 30 to 32, thereby performing position feedback control and speed feedback control. In FIG. 1, illustration for the position feedback control and speed feedback control is omitted.

Further, a spindle control circuit 60 receives a spindle rotation command and outputs a spindle speed signal to a spindle amplifier 61. The spindle amplifier 61 receives the spindle speed signal and rotates a spindle motor 62 at a commanded rotational speed. A position coder 63 feeds back a feedback pulse to the spindle control circuit 60 in synchronism with the rotation of the spindle motor 62. Speed control is performed based on the feedback pulse.

According to the present invention, the machining program check mode is provided so that interference between the machine's moving part (e.g., tool) and another part (e.g., jig) can be forecasted safely and securely by lowering moving speeds at points of time near the start and end of movement in each block of a movement command in the machining program when the numerical controller 10 is operated in the check mode.

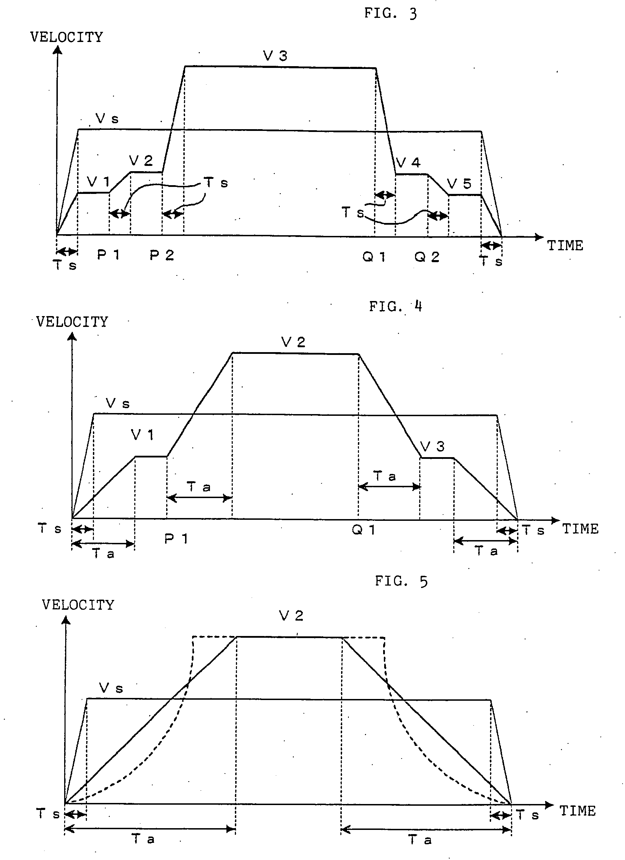

FIG. 2 is a diagram showing a first example of speed change during the execution of one block of the machining program in the machining program check mode provided for the machine that is controlled by the numerical controller of FIG. 1.

If a speed commanded by the machining program is Vs, predetermined acceleration/deceleration processing is performed to drive the servomotors 50 to 52 in the normal execution of the machining program, and the moving part is driven at the commanded speed Vs. The example shown in FIG. 2 is an example of linear acceleration/deceleration processing. In FIG. 2, Ts designates a time constant for linear acceleration/deceleration.

For the machining program check mode, however, a low movement start speed V1, a high intermediate speed V2, and a low movement end speed V3 are set in advance. Further, a first point P1 of switching from the movement start speed V1 to the intermediate speed V2 is previously set as an amount of movement, while a second point Q1 of switching from the intermediate speed V2 to the movement end speed V3 is previously set as a residual amount of movement to the end of movement. The movement start speed V1 and the movement end speed V3 may be equalized (V1 = V3). The intermediate speed V2 may be set to the maximum speed of the machine which is determined whether or not interference is caused during a low-speed movement before or after a movement at the speed V2.

When the CPU 11 reads the machining program and executes a block of the movement command, it first outputs a command for the set low movement start speed V1 and drives the servomotors 50 to 52 to actuate the moving part of the machine at the movement start speed V1. If an amount of movement from a movement start position reaches the movement amount at the first switching point P1, the command for the speed V1 is switched over to the speed command for the high intermediate speed V2, and the servomotors 50 to 52 are driven. Further, it is determined whether or not the residual movement amount at the second switching point Q1 is reached by the residue of the movement amount commanded in this block. If it is concluded that the residual movement amount at the second switching point Q1 is reached, the commanded speed V2 is switched over to the low movement end speed V3, and the servomotors 50 to 52 are driven.

In consequence, as shown in FIG. 2, the pattern of movement in the one block includes a low movement start speed V1 for a predetermined distance (movement amount at the switching point P1) from the start of movement and a low movement end speed V3 for a predetermined distance (residual movement amount at the switching point Q1) immediately before the end of movement. Since the speeds of movement of the moving part at the start and end of movement are thus low, the direction of movement of the moving part can be identified with ease. As a result, the occurrence of interference between the tool as the moving part and some other part can be forecasted with ease, so that the interference can be prevented safely and securely.

FIG. 3 is a diagram showing a second example of speed change during the execution of one block of the machining program in the machining program check mode provided for the machine that is controlled by the numerical controller of FIG. 1.

In this second example, as shown in FIG. 3, each of low-speed regions at the start and end of movement is divided into a plurality of speed regions. Specifically, a first movement start speed V1, a second movement start speed V2, a first point P1 of switching (set by a movement amount) from the first movement start speed V1 to the second movement start speed V2, and a second point P2 of switching (set by a movement amount) from the second movement start speed V2 to a high intermediate speed V3 are individually set for the low-speed region at the start of movement.

Further, the intermediate speed V3 is set for a region between the low-speed regions at the start and end of movement. The intermediate speed V3 may be set to the maximum speed of the machine.

Furthermore, a first movement end speed V4, a second movement end speed V5, a third point Q1 of switching (set by a residual movement amount) from the intermediate speed V3 to the first movement end speed V4, and a fourth point Q2 of switching (set by a residual movement amount) from the first movement end speed V4 to a second movement end speed V5 are individually set for the low-speed region at the end of movement.

In this second example of speed change, as described above, the low-speed regions at the start and end of movement are controlled individually at two-stage speeds. The first and second movement start speeds V1 and V2 may be set equal to the second and first movement end speeds V5 and V4, respectively.

When the machining program is executed in the machining program check mode in the second example of speed change, the moving part is first driven at the set first movement start speed V1 in the block of the movement command. If a movement amount at the speed V1 reaches the movement amount at the first switching point P1, the moving part is driven at the set second movement start speed V2. If a movement amount at the speed V2 reaches the movement amount at the second switching point P2, the moving part is driven at the set third intermediate speed V3. If a movement amount at the speed V3 equals the residual movement amount at the third switching point Q1, the drive speed is switched to the set first movement end speed V4. If a residual movement amount at the speed V4 equals the residual movement amount at the fourth switching point Q2, the drive speed is switched to the second movement end speed V5.

FIG. 4 is a diagram showing a third example of speed change during the execution of one block of the machining program in the machining program check mode provided for the machine that is controlled by the numerical controller of FIG. 1.

In this third example, an acceleration/deceleration time constant (time required for acceleration or deceleration) at the start and end of movement is made larger than a normal acceleration/deceleration time constant.

In the third example of speed change, a acceleration/deceleration time constant Ta for the machining program check mode is set to be larger than a normal acceleration/deceleration time constant Ts, and a low movement start speed V1, a high intermediate speed V2, and a low movement end speed V3 are set (V1 and V3 may be equal). Further, a first point P1 of switching from the movement start speed V1 to the intermediate speed V2 is previously set as an amount of movement, while a second point Q1 of switching from the intermediate speed V2 to the movement end speed V3 is previously set as a residual amount of movement to the end of movement.

When the machining program is executed in the machining program check mode, the movement command is interpolated with the set movement start speed V1 at the start of movement in the block of the movement command, the interpolated movement command is subjected to acceleration/deceleration processing with the large acceleration/deceleration time constant Ta for the machining program check mode, and the servomotors 50 to 52 are driven to actuate the moving part. Therefore, the rise of the speed is slower than in a normal case, and the target speed is the low movement start speed V1. Accordingly, the moving speed of the moving part is so low that the direction of movement or the like of the moving part can be identified with ease. If the set movement amount at the first switching point P1 is reached, moreover, the speed V1 is switched over to the high intermediate speed V2. If the movement at the speed V2 makes the residual movement amount equal to the residual movement amount at the second switching point Q1, the speed V2 is switched over to the movement end speed V3, and the deceleration processing is performed with the large acceleration/deceleration time constant Ta. Thereupon, a commanded position of the block is reached.

In the third example of speed change shown in FIG. 4, the acceleration/deceleration time constant for the machining program check mode is uniformly adjusted to Ta (large acceleration/deceleration time constant). Alternatively, however, only time constant at the start of movement and time constant at the end of movement may be comparatively large. In this case, the normal acceleration/deceleration time constant Ts may be used when the movement start speed V1 is switched over to the intermediate speed (maximum speed) V2 or when the intermediate speed V2 is switched over to the movement end speed V3.

FIG. 5 is a diagram showing a fourth example of speed change during the execution of one block of the machining program in the machining program check mode provided for the machine that is controlled by the numerical controller of FIG. 1.

In this fourth example, the acceleration/deceleration time constant for the machining program check mode is only changed to the time constant Ta that is larger than the normal time constant Ts. As the acceleration/deceleration time constant is large in this example, and as a result, the acceleration/deceleration time becomes long, speeds at points of time near the start and end of movement become low. In consequence, the direction of movement of the moving part and interference between the moving part and some other object can be forecasted with ease.

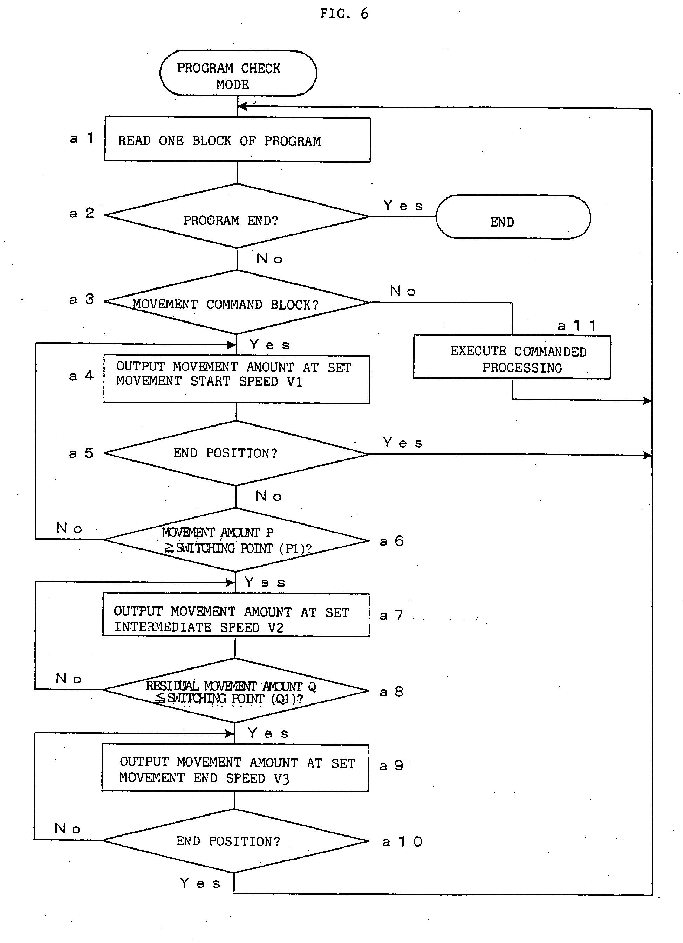

FIG. 6 is a flowchart showing an algorithm of processing in the program check mode for the aforementioned first example of speed change that is executed by the CPU 11 of the numerical controller 10.

In the first example of speed change, movement command processing for each block is executed with the speed pattern shown in FIG. 2. As mentioned before, the movement start speed V1, intermediate speed V2, movement end speed V3, and movement amounts at the first and second switching points P1 and Q1 are previously set through the display/manual input unit 20. Then, if the machining program is executed with the numerical controller 10 switched to the machining program check mode by the display/manual input unit 20, the CPU 11 of the numerical controller 10 starts the processing shown in FIG. 6.

First, one block is read from the machining program and decoded (Step a1), and whether or not it is a program end command is determined (Step a2). If the read block is not the program end command, it is then determined whether or not it is a movement command block (Step a3). If the block is not for the movement command, the command given by this block is processed in the same manner as in the conventional case (Step a11), whereupon the program returns to Step a1.

If it is concluded in Step a3 that the read block is the movement command block, on the other hand, then the movement command is interpolated with the set movement start speed V1 to obtain movement amount for each interpolation period, and the movement amount thus obtained is subjected to acceleration/deceleration processing and outputted. The acceleration/deceleration processing may be either pre-interpolation acceleration/deceleration processing or post-interpolation acceleration/deceleration processing. Therefore, the movement amount is subjected to conventional acceleration/deceleration processing and delivered to each of the axis control circuits 30 to 32 of the servomotors 50 to 52. In the axis control circuits 30 to 32, feed back control in respect of position and speed is carried out based on the commanded movement amount and actual positions and actual speeds that are fed back from the position/speed detectors, and further, feed back control in respect of current is carried out in the conventional manner, and the servo amplifiers 40 to 42 are controlled to drive the servomotors 50 to 52.

While a movement amount is outputted for each interpolation period, it is determined whether or not an end position commanded in a present block is reached (Step a5) and whether or not the set movement amount at the first switching point P1 is reached by the amount P of movement from the start (Step a6). The processing in Steps a4 to a6 constitutes movement start speed control means.

If the movement amount of the movement command given by the present block is so small that the movement amount of the movement command is reached before the movement amount at the first switching point P1 is reached, the end position commanded in the present block is reached by deceleration processing at the low speed V1 without being switched over to the high intermediate speed V2. Thereupon, the program returns to Step a1, in which the next processing is performed.

When the movement amount at the first switching point P1 is reached by the movement amount P (Step a6), on the other hand, the speed V1 is switched over to the intermediate speed V2, and the movement amount for each interpolation period is obtained. The obtained movement amount is subjected to acceleration/deceleration processing and outputted (Step a7). The movement amount is outputted every interpolation period, while it is determined whether or not the residue Q of the movement amount commanded in the present block is equal to or smaller than the residual movement amount at the second switching point Q1 (Step a8). The processing in Steps a7 and a8 constitutes high speed control means.

If the residual movement amount Q becomes equal to or smaller than the residual movement amount at the second switching point Q1, the speed V2 is switched over to the movement end speed V3, and the movement amount for each interpolation period is obtained, subjected to acceleration/deceleration processing, and outputted (Step a9). Then, it is determined whether or not the end position commanded in the present block is reached (or whether the residual movement amount Q is 0 or not) (Step a10). The processing in Steps a8 to a10 constitutes movement end speed control means.

If the movement command to the end position is outputted, the program returns to Step a1, and the processing in Steps a1 to a11 is executed until the program end command is read from the read block.

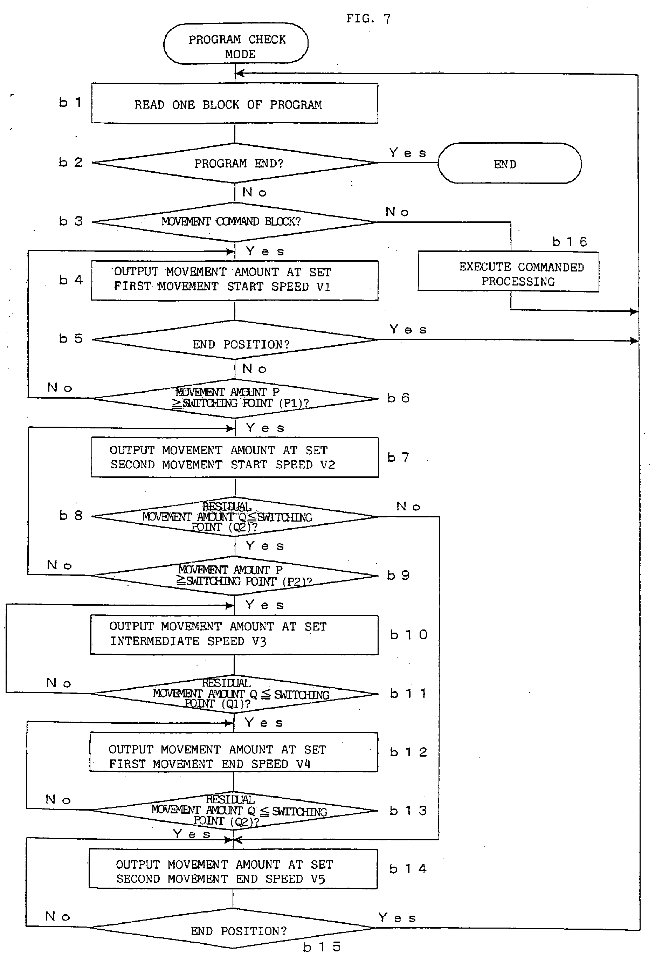

FIG. 7 is a flowchart showing an algorithm of processing in the program check mode for the aforementioned second example of speed change that is executed by the CPU 11 of the numerical controller 10.

Processing in Steps b1 to b6 and processing in Step b16 are identical to the processing in Steps a1 to a6 and processing in Step a11 in the machining program check mode for the first example of speed change shown in FIG. 6.

If the end position commanded in the present block is not reached during the movement at the set movement start speed V1 (Step b5), and if the movement amount from the movement start in the present block reaches the movement amount at the first switching point P1 (Step b6), the speed is switched to the set second movement start speed V2, and the movement amount for each interpolation period is obtained, subjected to acceleration/deceleration processing, and outputted (Step b7).

It is determined whether or not the residual movement amount Q is equal to or smaller than the residual movement amount at the fourth switching point Q2 (Step b8), and the movement command is outputted for every interpolation period, while it is determined whether or not the movement amount at the second switching point P2 is reached by the movement amount P (Step b9).

If it is concluded that the residual movement amount Q is reduced to the residual movement amount at the fourth switching point Q2 or a smaller amount during acceleration to, or movement at, the second movement start speed V2, the program proceeds to Step b14, in which the servomotors 50 to 52 are driven at the switched second movement end speed V5, as described later. In the processing in the machining program check mode for the second example of speed change, the processing in Steps a4 to a9 constitutes movement start speed control means.

If it is concluded in Step b9 that the movement amount at the second switching point P2 is reached by the movement amount P after the movement amount is outputted at the second movement start speed V2, then the speed V2 is switched over to the high intermediate speed V3 and the movement amount is obtained. The obtained movement amount is subjected to acceleration/deceleration processing, and the movement amount for each axis is delivered to each of the axis control circuits 30 to 32. It is determined whether or not the residual movement amount Q is equal to or smaller than the residual movement amount at the third switching point Q1, while each movement amount is outputted to each axis control circuit for every interpolation period (Steps b10 and b11). The processing in Steps b10 and b11 constitutes high speed control means.

If the residual movement amount Q becomes equal to or smaller than the residual movement amount at the third switching point Q1, the speed V3 is switched over to the first movement end speed V4, and the movement amount is obtained in the same manner as aforesaid. Then, the servomotors 50 to 52 are driven at the first movement end speed V4 to actuate the moving part (Steps b12 and b13). If the residual movement amount Q becomes equal to or smaller than the movement amount at the fourth switching point Q2, the speed V4 is switched over to the second movement end speed V5, and the movement amount is obtained in the same manner as aforesaid. Then, the servomotors 50 to 52 are driven at the second movement end speed V5 to actuate the moving part (Steps b13 and b14). If the position commanded in the present block is reached (Step b15), the program returns to Step b1, in which the next block processing is started. In this second example of speed change, the processing in Steps b12 to b15 constitutes movement end speed control means.

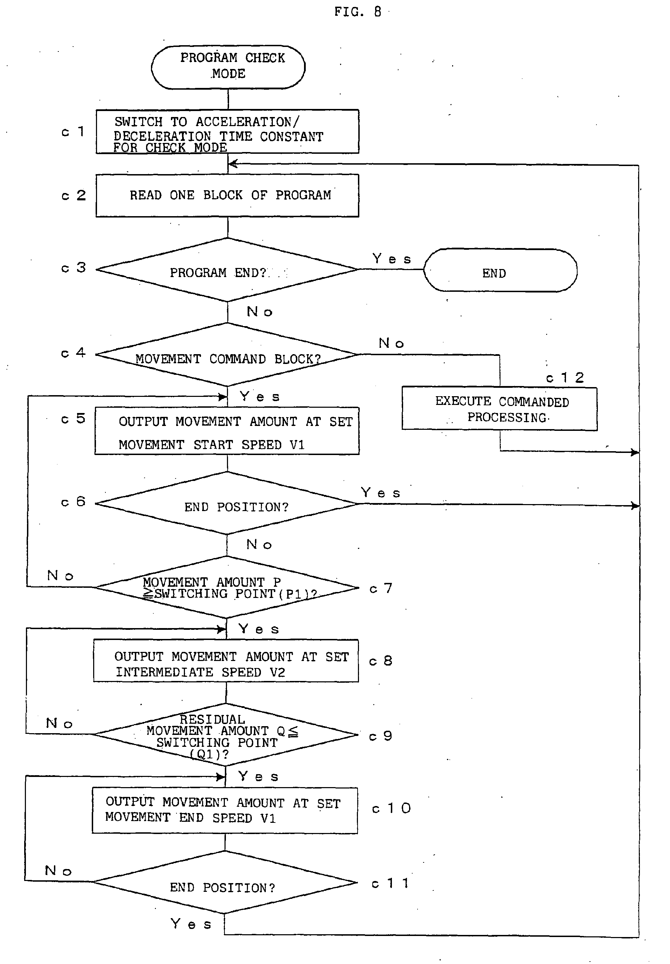

FIG. 8 is a flowchart showing an algorithm of processing in the program check mode for the aforementioned third example of speed change that is executed by the CPU 11 of the numerical controller 10.

This processing differs from the processing shown in FIG. 6 only in that processing in Step c1 in which the acceleration/deceleration time constant is switched from the normal time constant Ts to the time constant Ta set for the machining program check mode, when the mode is switched to the machining program check mode and a command for the execution of the machining program is issued, is added to the processing for the machining program check mode in the first example of speed change. Thus, processing in Steps c2 to c12 in the machining program check mode for the third example of speed change is identical to the processing in Steps a1 to a1l in the machining program check mode for the first example of speed change shown in FIG. 6.

The fourth example of speed change shown in FIG. 5 only requires change of the acceleration/deceleration time constant. When the machining program check mode is set, therefore, the machining program is only expected to be executed in the normal manner with the acceleration/deceleration time constant switched from the normal time constant Ts to the large acceleration/deceleration time constant Ta for the machining program check mode. Since the large acceleration/deceleration time constant is controlled in this example, the speeds at the start and end of movement for the movement command given in the block are lowered. In consequence, the direction of movement can be identified with ease, and the time required for the determination of the occurrence of interference is generous enough to prevent interference securely.

In each of the examples of speed change described above, the moving speeds at the start and end of movement for each block can be lowered to facilitate identification of the machine operation, thereby preventing occurrence of interference or the like. At the start of movement, it can be determined whether or not the direction of movement is wrong or in danger of bringing about interference with any other object. When the end of movement is approached, the time required for the determination of the occurrence of interference becomes generous enough to prevent interference easily and securely.

Even if only the moving speed at the start of movement based on the movement command in the block is lowered, it can be determined whether or not the direction of the movement will bring about any interference. This is because the direction of movement can be discriminated at the start of movement for the movement command in the block. In the first example of speed change shown in FIG. 2, for example, only the low movement start speed V1, the high speed V2, and the movement amount at the switching point P1 are set. In the machining program check mode, the low movement start speed V1 is commanded during the time interval from the start of movement based on the block command to the switching point P1. When the movement at the speed V1 reaches the movement amount at the switching point P1, the speed V1 should only be switched over to the relatively high speed V2. In the processing shown in FIG. 6, Steps a8 and a9 are omitted, as a result, the program proceeds from Step a7 to Step a10.

In the second example of speed change shown in FIG. 3, moreover, the low movement start speeds V1 and V2, the high speed V3, and the movement amounts at the switching points P1 and P2 are set. The moving part is driven at the low movement start speeds V1 and V2 at the start of movement and at the high speed V3 thereafter. In the processing shown in FIG. 7, in this case, Steps b11 to b14 are omitted, as a result, the program proceeds from Step b10 to Step b15. In Step b8, moreover, it is determined whether or not the end position is reached. If it is concluded that the end position is reached, the program returns to Step b1. If not, the program proceeds to Step b9.

Although the speed switching points P1, P2, Q1 and Q2 are set as movement amounts or residual movement amounts in each of the foregoing examples of speed change, furthermore, they may alternatively be set as time durations. In the machining program check mode, the set speeds V1, V2, V3, ...... are used for the drive without regard to the speed commanded by the program. Therefore, time durations corresponding to the movement amounts at the switching points P1 and P2 and time durations corresponding to the residual movement amounts at the switching points Q1 and Q2 can be obtained by calculation. If the time durations are set, in contrast with this, movement amounts and residual movement amounts corresponding to the time durations can be obtained. The movement amounts and residual movement amounts may be obtained by setting the time durations for the individual speed switching points and controlling them in the manner described in connection with the aforementioned examples of speed change, whereby the speeds at the start and end of movement can be lowered.

In the case where the moving part is moved at a low speed only at the start of movement, moreover, by using a time that measure time elapsed from the start of movement commanded in a block, the speed may be switched based on determination whether or not a time at a set switching point is reached by a time measured by the timer.

Although the acceleration/deceleration control according to each of the foregoing examples of speed change is of the linear type, furthermore, it may be replaced with exponential-function acceleration/deceleration control. If the speeds at the start and end of movement for the block are lowered by increasing the acceleration/deceleration time constant, as in the third and fourth examples of speed change, in particular, the exponential-function acceleration/deceleration control is preferred. In the case of the fourth example of speed change shown in FIG. 5, for example, if the machining program check mode is executed with the acceleration/deceleration time constant based on the exponential-function acceleration/deceleration control, the speed is lower in positions closer to the start of movement and suddenly reaches a target speed thereafter, as indicated by broken lines. Since the speed is lower in positions closer to the end of movement, moreover, identification of the direction of movement and forecasting of interference are easy.

According to each of the examples of speed change described herein, furthermore, the present invention is applied to the machine tool that is controlled by a numerical controller. However, the present invention is also applicable to any other machines such as a robot.

## Claims

1. A machine which comprises a controller and in which a drive motor for each axis is driven in accordance with a program, wherein
said controller is provided with a machining program check mode for checking operation based on the program; and
in the machining program check mode, the machine is moved at a speed lower than a programmed or set speed at the start of movement or at the start and end of movement when a movement command for each block of the program is executed during operation of a machining program.

2. A machine which comprises a controller and in which a drive motor for each axis is driven in accordance with a program, wherein
said controller has a program check function and comprises:
selecting means for selecting a machining program check mode for checking operation based on the program;
movement start speed control means which drives the drive motor at a set low movement start speed during a time interval from the start of movement based on a movement command given in each block to a switching point set by a time duration or a movement amount when the block is executed during operation of a machining program in the machining program check mode; and
high speed control means which drives the drive motor at a set speed higher than said movement start speed after said switching point is reached.

3. The machine according to claim 2, wherein the controller further comprises movement end speed control means which stats to drive the drive motor at a movement end speed lower than the speed driven by said high speed control means at a set point anterior to the end point of the movement command in each block by a set distance when the block is executed during operation of a machining program in the machining program check mode.

4. The machine according to claim 2, wherein the movement start speed control means switches the movement start speed between a plurality of speeds and controls the speed of the drive motor with use of a plurality of switching points and movement start speeds set individually for the switching points.

5. The machine according to claim 3, wherein the movement end speed control means switches the movement end speed between a plurality of speeds and controls the speed of the drive motor with use of a plurality of switching points and movement end speeds set individually for the switching points.

6. The machine according to claim 1, wherein an acceleration/deceleration time constant to be set in the machining program check mode is larger than an acceleration/deceleration time constant for normal program operation.

7. The machine according to claim 2, wherein an acceleration/deceleration time constant to be set in the machining program check mode is larger than an acceleration/deceleration time constant for normal program operation.

8. The machine according to claim 2, wherein the speed set for the high speed control means is a maximum speed.
